(19) **Europäisches Patentamt European Patent Office Office européen des brevets**

(11) **EP 4 718 194 A1**

(12) **EUROPEAN PATENT APPLICATION**

(43) Date of publication:
**01.04.2026 Bulletin 2026/14**

(21) Application number: **24203649.9**

(22) Date of filing: **30.09.2024**

(51) International Patent Classification (IPC):
**G05B 23/02** [(2006.01)]

(52) Cooperative Patent Classification (CPC):
**G05B 23/024; G05B 23/0221**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **BASF SE**
**67056 Ludwigshafen am Rhein (DE)**

(72) Inventors:
• **GENNADIJ, Heidel**
**01157 Dresden (DE)**
• **RUEHL, Phillip**
**10785 Berlin (DE)**

• **STRZYS, Martin Peter**
**67056 Ludwigshafen am Rhein (DE)**
• **TUOKEN, Hanati**
**69124 Heidelberg (DE)**
• **MUELLER, Klaus-Robert**
**10587 Berlin (DE)**
• **RUFF, Lukas**
**10623 Berlin (DE)**
• **SCHULZ, Florian**
**10623 Berlin (DE)**

(74) Representative: **BASF IP Association**
**BASF SE**
**GBI - Z078**
**67056 Ludwigshafen (DE)**

(54) **CONTROLLING OF A PLANT USING ANOMALY DETECTION**

(57) A method for monitoring and/or controlling a chemical production process, wherein the chemical production process comprises process signal data indicating an anomalous event, the method comprising the steps of:
- providing one or more process signal data associated with one or more sensor(s) monitoring one or more chemical production process(es), wherein the signal is indicative of one or more operating status changes associated with the one or more chemical production process(es);
- detecting one or more anomalous event(s) based on the one or more process signal data by providing the process signal data to a data-driven model configured to classify anomalous event(s) based on the one or more process signal data, wherein the data-driven model is parametrized based on at least partially labelled process signal data, wherein the labels are intermittent data points measured with respect to the chemical products produced by the chemical production process provided;
- providing the one or more detected anomalous event(s) associated with the respective one or more process signal data for monitoring and/or controlling the chemical production process of the one or more chemical plant(s).

Fig. 5

**Description**

TECHNICAL FIELD

The disclosure relates to a method for monitoring and/or controlling a chemical production process performed by a chemical plant. The disclosure further relates to an apparatus for monitoring and/or controlling a chemical production process, a chemical plant comprising a production operating system, use of the detected anomalous event(s) for producing a chemical product.

TECHNICAL BACKGROUND

The present disclosure relates, in general terms to detecting anomalous event(s) in a chemical production process performed by a chemical plant. The anomalous event(s) are detected by one or more data-driven models configured to classify process signal data associated with sensors as anomalous event(s).

SUMMARY

In an aspect the disclosure relates to a method for monitoring and/or controlling a chemical production process, wherein the chemical production process comprises process signal data indicating an anomalous event, the method comprising the steps of:

- providing one or more process signal data associated with one or more sensor(s) monitor-ing one or more chemical production process(es), wherein the signal is indicative of one or more operating status changes associated with the one or more chemical production process(es);
- detecting one or more anomalous event(s) based on the one or more process signal data by providing the process signal data to a data-driven model configured to classify anomalous event(s) based on the one or more process signal data, wherein the data-driven model is parametrized based on at least partially labelled process signal data, wherein the labels are intermit-tent data points measured with respect to the chemical products produced by the chemical pro-duction process provided;
- providing the one or more detected anomalous event(s) associated with the respective one or more process signal data for monitoring and/or controlling the chemical production process of the one or more chemical plant(s).

In another aspect the disclosure relates to an apparatus for monitoring and/or controlling a chemical production process, wherein the chemical production process comprises process signal data indicating an anomalous event, the method comprising the steps of:

- a data providing interface configured to provide one or more process signal data associated with one or more sensor(s) monitoring one or more chemical production process(es), wherein the signal is indicative of one or more operating status changes associated with the one or more chemical production process(es);
- an anomalous event detector configured to detect one or more anomalous event(s) based on the one or more process signal data by providing the process signal data to a data-driven model configured to classify anomalous event(s) based on the one or more process signal data, wherein the data-driven model is parametrized based on at least partially labelled process signal data, wherein the labels are intermittent data points measured with respect to the chemical products produced by the chemical production process pro-vided;
- an anomalous providing interface configured to provide the one or more detected anomalous event(s) associated with the respective one or more process signal data for monitoring and/or controlling the chemical production process of the one or more chemical plant(s).

In another embodiment disclosed is a use of an apparatus for monitoring and/or controlling a chemical production process according to any of the methods disclosed herein or by the apparatus disclosed herein for producing a chemical product.

In another embodiment disclosed is a chemical plant comprising a production operating system for monitoring and/or controlling a chemical production process according to any of the methods disclosed herein or by the apparatus disclosed herein.

In another embodiment a use of the one or more anomalous event(s) detected according to any of the methods disclosed herein or by the apparatus disclosed herein for adjusting the chemical production process for producing one or more chemical product(s).

In yet another aspect the present disclosure relates to a computer element with instructions, which when executed on one or more computing node(s) is configured to carry out the steps of the method(s) of the present disclosure or configured to be carried out by the apparatus(es) of the present disclosure.

Any disclosure, embodiments and examples described herein relate to the methods, the systems, apparatuses, chemical products and computer elements lined out above and below. Advantageously, the benefits provided by any of the embodiments and examples equally apply to all other embodiments and examples.

EMBODIMENTS

Reliable monitoring and/or controlling of a chemical production process is crucial for the quality of the produced chemical product(s), the processing of the chemical input material(s) and safety of the process and/or the chemical plant(s). However, there are often external factors or variables which may not be captured by sensors associated with the chemical production process leading to time-series which are inherently unpredictable. Monitoring and/or controlling of chemical plant(s) and the associated production process(es) is challenging due to the change of values of process signal data e.g. based on the fact that the chemical plant is operated in different operating state(s) or different chemical product(s) are produced by the chemical plant. This makes is challenging to detect anomalous event(s), since the distribution of the time-series data may change without comprising anomalous event(s). Detecting anomalies in such scenarios becomes challenging using standard approaches based on mathematical models that rely on stationarity to detect anomalies. Often alarm(s) are raised with process signal data associated with one or more sensor(s) monitoring one or more chemical production process(es) being performed by one or more chemical plant(s), comprising an event not detrimental to the outcome, usually called a false positive recognition of the event, or often an alarm is not raised with process signal data comprising an anomalous event, which is detrimental to the outcome and/or chemical production process, usually called a false negative recognition of the event. This makes reliable and robust monitoring and/or controlling of the chemical plant challenging.

Due to the very plurality of the false positive recognitions and the false negative recognitions, a skilled human operator of the chemical plant has to very closely attend the chemical process, i.e. respond to each alarm raised and, moreover, watch out for alarms not raised, decide about any change of the chemical process and manually operate the control unit in order to react adequately.

Both unnecessarily changing the chemical process and missing a necessary change of the chemical process may equally result in a deficient outcome, i.e. product, of the chemical process, i.e. in a small amount of the outcome, and/or in a poor quality of the outcome of the chemical process.

It is, therefore, an object of the invention to suggest a method for monitoring and/or controlling a chemical production process which at least partially relieves the operator from closely attending the chemical process and reliably improves the monitoring and/or controlling of the chemical production process(es). By detecting one or more anomalous event(s) based on the one or more process signal data associated with the one or more sensor(s) monitoring one or more chemical production process(es) being performed by one or more chemical plant(s) by providing the process signal data to a data-driven model configured to classify anomalous event(s) based on the one or more process signal data, a reliable and robust monitoring of the chemical production process can be ensured. This allows the reduction of false alarms and secures a stable chemical production process. Moreover, the proposed data-driven model(s) are configured to classify anomalous event(s) based on the one or more process signal data also take the context and additional data associated with the chemical production process, such as chemical product data, into account, which is important as the distribution changes. E.g., a different product may be produced in the chemical plant, but the basic structure of the data remains the same, the proposed data-driven model(s) for anomaly detection will also recognize the anomalous event(s) in a changed operating status state.

In the following, embodiments of the present disclosure will be outlined by ways of examples. It is to be understood that the present disclosure is not limited to said embodiments and/or examples.

One or more chemical production process(es) may be associated with a chemical production network. One or more chemical production process(es) may involve one or more chemical reactions that may cause a chemical transformation of one set of chemical substances, typically referred to as reactants or reagents, to another set of chemical substances, typically referred to as products. A chemical reaction may comprise a sequence of individual elementary reactions and may occur in a time-dependent manner at a characteristic reaction rate, which may depend on the conditions of the chemical reaction, such as temperature and concentration of chemical reactants.

The chemical production process may also involve physical transformations of the chemical substances, that may cause a change of the physical properties of a chemical substance, including its phase, shape, density, volume, or the like.

The basic steps in a chemical production process may be referred to as unit operations, and involve a physical change or a chemical transformation such as, but not limited to separation, crystallization, evaporation, filtration, polymerization, isomerization etc. The unit operations, as well as the chemical and/or physical changes of the chemical substances, may be time dependent.

One or more input material(s) may be provided to the chemical production process for producing one or more output material(s). The input material may be an input for a chemical production process also referred to as a precursor product, an intermediate material, a feedstock or a raw material used to produce one or more output material(s). The output material(s) may be produced from one or more input material(s) through one or more chemical process(es). The input material may be fed to the chemical production process to produce one or more output material(s). The input material may be fed to chemical production network including one or more production process(es) with multiple process steps. The input material may be fed to the chemical production network at the start of the chemical production process or at any intermediate stage of the chemical production process e.g. of the production chain producing the output material.

Chemical plant may relate to any manufacturing facility based on chemical production processes, e.g. transforming a feedstock to a product using chemical processes. In contrast to discrete manufacturing, chemical manufacturing may be based on continuous processes or batch processes. Monitoring and/or controlling of chemical plants may be time dependent and hence based on large time series of process signal data. A chemical plant may include more than 1.000 measurement(s).

In chemical plants, product(s) may be produced via one or more chemical production processes transforming the feedstock via one or more intermediate product(s) to the one or more output product(s). A chemical plant may be a production facility producing a chemical product, that may be used as feedstock for the next steps in the chemical value chain. Chemical plants may be large-scale plants like oil and gas facilities, gas cleaning plants, carbon dioxide capture facilities, liquefied natural gas (LNG) plants, oil refineries, petrochemical facilities or chemical facilities. Upstream chemical plants in petrochemicals process production for example include a steam cracker starting with naphtha being processed to ethylene and propylene. These upstream products may then be provided to further chemical plants to derive downstream products such as polyethylene or polypropylene, which may again serve as feedstock for chemical plants deriving further downstream products. Chemical plants may be used to manufacture discrete products. In one example a chemical plant may be used to manufacture precursors for polyurethane foam. Such precursors may be provided to a second chemical plant for the manufacture of discrete products, such as an isolation plate comprising polyurethane foam.

One or more process signal data may be associated with one or more sensor(s) monitoring one or more chemical production process(es). The chemical production process(es) may be performed by one or more chemical plant(s). Process signal data may be time-dependent sensor data measured and provided by one or more sensor(s) monitoring process parameter(s) of the chemical reaction process. Process signal data may include recorded and/or measured data. Process signal data may be measured and/or recorded through various sensors and instruments that are associated with the chemical plant. Process signal data may include time-series data of process signal data. Process signal data may include time-series data of equipment operating conditions. The time-dependent sensor data may represent the time variation of the value of a process parameter, such as, for instance, a temperature, a flow, a density, a viscosity, a volume, a turbidity, a concentration of a gas or the like. The time-series may relate to multivariate times-series sensor data. Multivariate time-series sensor data may relate to a collection of data points. The data point(s) may contain multiple measurements captured by multiple sensors at different points in time. The data may involve recording observations of multiple variables, each of which is measured by a different sensor at a specific point in time. Process signal data may be provided from a database or from one or more measurement points. The signal may be indicative of one or more operating status changes associated with one or more chemical production process(es). The signal may include the operating status change(s). Signal(s) being indicative of one or more operating status changes may relate to the fact that the signal comprises the operating status changes. Operating status changes may not relate to additional data point(s). Operating status changes may not be available to the operator and/or known.

The signal may be indicative of one or more operating status changes associated with the one or more chemical production process(es) The chemical plant may comprise one or more condition(s). Condition(s) may depend on operating states. Changing conditions of the chemical plant may result in deviating physical parameter(s). Changing conditions of the chemical plant may result in change point(s) in the collected data such as process signal data and/or quality data associated with the produced chemical product(s). Operating status changes may not relate to anomalous event(s). Operating status changes may occur when a condition of the chemical plant may be adapted in order to improve the chemical production process. Operating status changes may occur when the chemical production process may be adapted. The chemical production process may be adapted to produce further chemical product(s). Change points may occur after a turn-around or shut down. There may be various other external factors leading to time-series which are not predictable or lead to other changes in the data captured by the sensors. Therefore, the values of the physical parameters may change without showing an anomalous event and it may be important to detect anomalous event(s) independently from the exact values. The data-driven model may detect a non-anomalous event(s) within the time-series of process signal data and may provide an event signal indicating the detected non-anomalous event to be an operating status change of the chemical plant. An operating status change may be a non-anomalous event.

Process state(s) of the chemical plant may comprise on/off states of the chemical plant. Process states may comprise start-up states, stable states and shut down states. Start-up states may be states, where the chemical plant may be starting up, but is not in a stable state. Therefore, the physical parameter(s) may vary. Stable states may be states, where the chemical plant may be operating under stable condition(s). Stable condition(s) may be condition(s), where the process runs within predefined specification. Predefined specification may relate to the process being above or below a predefined threshold and/or being within or outside a predefined range. Shut down states may be states, where the production process may still be running, but the physical parameter(s) may change. There may be scenarios when the behavior of a machine changes based on usage or external factor.

Anomaly detection in chemical production process(es) may relate to the identification of abnormal or unexpected patterns, events, or behaviours that may deviate from the normal operating conditions. Anomaly detection may include the identification of rare items, events or observations which deviate in a significantly relevant manner, from most of the data, and therefore do not conform to a well-defined notion of normal behavior. Normal behavior may be a current or expected state of the chemical production process. Detecting anomalies in chemical the production process may be crucial for maintaining operational efficiency, minimizing downtime, ensuring product quality, and preventing safety hazards. Anomaly detection may relate to the detection of anomalous event(s). Anomalous event(s) may be associated with process signal data. Detection of anomalous event(s) may include data collection, optionally data pre-processing and/or data labelling, using data-driven model(s) to identify anomalous event(s) based on deviations from learned patterns or unusual data patterns and providing the detected anomalous event(s).

One or more sensor(s) may be associated with one or more process signal data. One or more sensor(s) may be monitoring one or more chemical production process(es) being performed by one or more chemical plant(s). Sensors may be used for measuring parameters related to the process signal data. Sensors may be used for measuring parameters related to the chemical plant equipment. A chemical plant may comprise one or more sensor(s), in most embodiments a plurality of sensors. The sensors may be configured for detecting physical parameters, in most embodiments a plurality of physical parameters, of the performed chemical production processes and may provide actual time series corresponding to the detected physical parameters to the plurality of physical parameters. One or more sensor(s) may be associated with one or more sensor type(s) and/or one or more sensor location(s) associated with the chemical plant(s) and/or one or more sensor value(s). Sensor type(s) may relate to classifying sensor(s) based on the measurement method, features of the parameter being measured, characteristics of the sensor and/or their application. Sensor types may include temperature sensors, pressure sensors, proximity sensors, accelerometers, humidity sensors, flow rate sensors, pH sensors, gas sensors, light sensors and/or motion sensors.

Sensor location may relate to the physical placement or positioning of a sensor in a chemical production process and/or chemical plant to measure a specific parameter or collect data. It may involve determining the optimal position or location for the sensor to accurately capture and monitor the desired process signal data. The sensor location may be crucial as it may directly impact the quality and reliability of the data collected. Proper sensor placement may ensure that the sensor can effectively measure the intended parameter and provide representative readings. The sensor(s) may not be associated with a dedicated device of the chemical plant, i.e. the sensor may not monitor a particular device, i.e. asset, of the chemical plant.

Sensor value(s) may relate to the measurements or readings obtained by sensor(s). Sensor(s) may measure various physical, chemical, or biological quantities, such as temperature, pressure, humidity, flow rate, light intensity, or gas concentration. The value obtained by the sensor may be in the form of an electrical or digital signal that may represent the measured quantity.

Sensor value(s) may relate to the measurements or readings obtained by sensor(s). Sensor(s) may measure various physical, chemical, or biological quantities, such as temperature, pressure, humidity, flow rate, light intensity, or gas concentration. The value obtained by the sensor may be in the form of an electrical or digital signal that may represent the measured quantity.

Sensor measurement(s) may be performed in frequent time intervals. The time intervals may have a length of less than half an hour, preferably less than 30 minutes, more preferably less than 15 minutes.

One or more data-driven model(s) may be configured to classify anomalous event(s) based on the one or more process signal data, wherein the data-driven model may be parametrized based on at least partially labelled process signal data, wherein the labels may be intermittent data points measured with respect to the chemical products produced by the chemical production process provided. The data-driven model may be a classification model. A classification model may be suitable for classifying input data according to indications associated with output data. Indications associated with output data may be output labels. The classification model and/or the data driven model may comprise at least one machine-learning architecture and model parameters. For example, the machine-learning architecture may be or may comprise one or more of: linear regression, logistic regression, random forest, piecewise linear, nonlinear classifiers, support vector machines, naive Bayes classifications, nearest neighbors, neural networks, convolutional neural networks, generative adversarial networks, support vector machines, or gradient boosting algorithms or the like. In the case of a neural network, the model may be a multi-scale neural network or a recurrent neural network (RNN) such as, but not limited to, a gated recurrent unit (GRU) recurrent neural network, vision transformer or a long short-term memory (LSTM) recurrent neural network. The data-driven model may be a large language model (LLM).

In an embodiment, data-driven model may be parametrized based on a training data set. The data-driven model may be trained based on a training data set. The data-driven model may be trained and/or parametrized based on a training data set. The training data set may comprise at least one input and at least one desired output. The training data set may comprise a plurality of input data and a plurality of output data. Training the model may include parametrizing the model. The data-driven model may be parametrized and/or trained to provide output data based on input data, in particular receiving input data. Providing output data based on input data may comprise determining output data based on input data. Providing output data based on input data may comprise mapping input data to output data. The data-driven model may be parametrized and/or trained to receive input data. Data-driven model may receive input data at an input layer. The training data may be used as input data and vice-versa. The following embodiment(s) that may be related to the input data may be related to the training data and vice versa.

The term training may also be denoted as learning. The term specifically may refer, without limitation, to a process of building the data-driven model, in particular determining and/or updating parameters of the data-driven model. Updating parameters of the data-driven model may also be referred to as retraining. Retraining may be included when referring to training herein. During the training the data-driven model may be adjusted to achieve best fit with the training data, e.g. relating the at least on input value with best fit to the at least one desired output value. In case of a RNN, a gradient descent algorithm or a backpropagation-through-time algorithm may be employed for training purposes. Training a data-driven model may include or may refer without limitation to calibrating the model. The historic time-series comprise previous time series of the chemical production process. For instance, 90% of the historic time-series may be used for training the artificial neural network. The remaining 10% of the historic time-series may be used for testing the data-driven model. In other words, 90% of the historic time series may be used as training data while 10% of the historic time series may be used as verification data. The testing may result in a ratio of false positive recognitions and false negative recognitions.

Parametrizing the data-driven model may be conducted based on at least partially labelled process signal data, wherein the labels may be intermittent data points measured with respect to the chemical products produced by the chemical production process provided. Preferably the process signal data may comprise partially labeled data. Intermittent data point(s) may relate to labels, which may not be available at every time-series data point(s). Intermittent data point(s) may relate to sparse data point(s). Labels may not be available or exist for alle times. Not every process signal data may comprise a label. Label(s) may merely be available, where one or more data point(s) with respect to the chemical products may be measured for the respective process signal data. Intermittent data point(s) may relate to one or more limited time-series comprising labels. Intermittent data point(s) may relate to the fact that not all process signal data point(s) comprise label(s). Labeling may be based on intermittent data point(s) measured with respect to the chemical product(s). Chemical product(s) produced by the chemical production process may be analyzed. Analysis of the chemical product(s) may be performed at one or more laboratories. Analysis of the chemical product(s) may be performed at the one or more chemical plant(s). Analysis may be performed inline. Analysis may be performed at irregular time point(s). Irregular time point(s) may relate to a coarse time grid of the data point(s) measured with respect to the chemical product(s). Measured data points with respect to the chemical products may relate to quality data associated with the chemical product produced by the chemical production process.

In an embodiment providing one or more process signal data may comprise pre-processing of the one or more process signal data by transforming process signal data from different sensor(s) to a common time scale and/or eliminating common time frames of the process signal data, in which the chemical process was in an off-state. Pre-processing may be different for different sensor(s). Pre-processing techniques may be applied based on the sensor type(s), sensor value(s) and/or sensor location. Pre-processing may be applied based on the data-driven model used for detecting the anomalous event(s). One or more pre-processing techniques may be applied to the process signal data. For process signal data associated with different sensor(s), different pre-processing techniques may be applied. Data pre-processing may relate to techniques applied to raw sensor data to transform it into a format that may be suitable for analysis and/or the use of the process signal data for the data-driven model(s). The goal of the data pre-processing may be to enhance the data quality for the further analysis. Data pre-processing may include removal of noise, removal of certain effects that may occur randomly, however, may not be relevant for further analysis, reduce the dimension space and/or removal of irrelevant data in the data set and/or obtain relevant data. Eliminating common time frames of the process signal data, in which the chemical process was in an off-state may relate to time frames of process signal data being below or above a threshold.

Examples of pre-processing of the process signal data that may be suitable for anomaly detection may include mapping from time-series space to frequency space via Fast Fourier Transformation, minima and/or maxima, transformation of the time grid coarser or finer and/or principal components analysis (PCA).

In another embodiment providing one or more process signal data comprises labelling at least part of the one or more process signal data based on chemical product data associated with chemical product(s) being produced by the respective one or more chemical production process(es). Labelling may include classifying the one or more process signal data as anomalous event(s). Labelling may include classifying the one or more process signal data as non-anomalous event(s). Labelling the process signal data may comprise assigning a label to the process signal data. The label may indicate anomalous event(s) within the process signal data. The label may also indicate a type of the anomalous event(s). The label may support the data-driven model in classifying the detrimental event. Labelling the historic time series may be a time-consuming task which may have to be accomplished by a person. Preferably the data may be partially labelled. The operator may partially label the process signal data. Labelling may include labelling an operating status change based on intermittent data points measured with respect to the chemical products produced by the chemical production process provided. Labelling may include matching the intermittent data points with respect to the chemical products produced by the chemical production process to the respective process signal data. The matching may be based on the time series.

In another embodiment the one or more process signal data associated with one or more sensor(s) may comprise process signal data associated with one or more sensor type(s) and/or process signal data associated with one or more sensor value(s) and/or process signal data associated with one or more sensor location(s) of the chemical plant(s). Labelling and/or data pre-processing of the one or more process signal data may be based on the one or more sensor type(s) and/or process signal data associated with one or more sensor value(s) and/or process signal data associated with one or more sensor location(s) of the chemical plant(s). Labelling and/or data pre-processing may be selected per sensor type(s), sensor value(s) and/or sensor location(s). The training data may comprise process signal data as well associated with one or more sensors comprising process signal data associated with one or more sensor type(s) and/or process signal data associated with one or more sensor value(s) and/or process signal data associated with one or more sensor location(s) of the chemical plant(s).

In another embodiment detecting the anomalous event may comprise determining the one or more type(s) of anomalous event(s) based on the one or more properties of the specification. The one or more anomalous event(s) may be mapped to the respective process signal data. The type of the one or more anomalous event(s) may relate to a failure of a device of the chemical plant, an anomalous drift of the chemical production process or a configuration of the chemical production process resulting in deficient condition data associated with the chemical production process and/or quality anomalies associated with the chemical products produced by the chemical production process. Properties of the specification may relate to chemical and/or physical and/or mechanical properties of the chemical product(s). Property data may relate to chemical properties. Chemical properties may describe the change of a substance's chemical composition given a specific set of conditions. Chemical properties may describe the change of a substance's chemical composition given a specific set of conditions. Chemical properties may include flammability, toxicity, acidity, reactivity, combustibility, or the like. Property data may relate to physical properties. Physical properties may be used to describe the physical characteristics of a substance. Physical properties may be observed or measured without changing the identity of the substance. Physical properties may include colour, density, viscosity, hardness, a boiling point, flashpoint, melting point, and/or pour point or the like. Mechanical properties may relate to the behaviour of materials under the action of external forces. Mechanical properties may include modulus, strength, elasticity, or the like. Chemical and/or physical properties and/or mechanical properties may relate to any properties of chemical product(s) that may be relevant and/or critical for the chemical production process(es) of the chemical plant(s).

In another embodiment the detecting one or more anomalous event(s) based on the one or more process signal data associated with the one or more sensor(s) monitoring one or more chemical production process(es) being performed by one or more chemical plant(s) by providing the process signal data to a data-driven model configured to classify anomalous event(s) based on the one or more process signal data may comprise extracting the non-anomalous event(s) from the process signal data and to classify the extracted non-anomalous event(s) as non-anomalous. Accordingly, an operator operating the chemical plant may be at least partially relieved from telling apart anomalous and non-anomalous events.

In another embodiment detecting one or more anomalous event(s) based on the one or more process signal data associated with the one or more sensor(s) monitoring one or more chemical production process(es) being performed by one or more chemical plant(s) by providing the process signal data to a data-driven model configured to classify anomalous event(s) based on the one or more process signal data may comprise validating the detected anomalous event(s) by mapping the process signal data signified as anomalous to chemical product data associated with chemical product(s) being produced by the respective one or more chemical production process(es). The chemical product(s) being produced by the respective one or more chemical plant(s) may comprise a quality being outside or below the specification limit. This may relate to chemical product(s) being outside a quality specification. If the chemical product(s) may comprise a poor product quality and the respectively mapped process signal data may be signified as anomalous, the detected anomalous event(s) may be validated.

In another embodiment the data-driven model may be parametrized based on historic process signal data associated with one or more sensor(s) comprising one or more anomalous event(s) and one or more non-anomalous event(s).

The data-driven model may be parametrized on a training data set comprising one or more anomalous event(s) and one or more non-anomalous event(s) so that the model may be trained in ignoring conspicuous signals in the time series and may merely outputs the detrimental events. Providing such a data-driven model may allow separation between anomalous and non-anomalous event(s).

In another embodiment the data-driven model may be parametrized based on labelled historic process signal data and unlabelled historic process signal data associated with one or more sensor(s).

Therefore, at least part of the historic process signal data used for parametrizing the data-driven model may be labelled. The data-driven model may be trained with both labeled historic process signal data and unlabeled historic process signal data. In other words, the data-driven model may be trained with partially labeled time series. The labels may support the data-driven model in learning to classify the anomalous event.

The data-driven model may be parametrized on a training data set comprising one or more anomalous event(s) and one or more non-anomalous event(s) so that the model may be trained in ignoring conspicuous signals in the time series and may merely outputs the anomalous events. Providing such a data-driven model may allow separation between anomalous and non-anomalous event(s) without detecting operating status changes as anomalous event(s). This may lead to the reduction of false alarms.

In another embodiment the data-driven model may be parametrized based on one or more historic process signal data associated with multiple sensors being associated with multiple chemical production processes of a chemical plant to be monitored and/or controlled. The data-driven model may be parametrized based on historic process signal data associated with the multiple sensor(s) being associated with the respective multiple production processes to be monitored and/or controlled. One or more data-driven models may be trained for each of the multiple sensor(s) being associated with the multiple production processes to be monitored and/or controlled. One or more data-driven models may be trained for the multiple sensor(s) being associated with the multiple production processes to be monitored and/or controlled of the respective chemical plant.

In another embodiment the data-driven model may comprise a trained neural network comprising a time memory and may be configured to classify one or more process signal data as anomalous event(s). The trained neural network may comprise an RNN. The RNN architecture for time-series forecasting may comprise input layer(s), one or more hidden layers with LSTM or GRU cells and an output layer(s). The RNNs may be parametrized based on a training data set. The RNNs may be trained based on a training data set. The training data set may include one or more historic process signal data associated with one or more sensors. The RNN architecture may comprise an embedded memory function. Preferably, the training data set may include multiple process signal data associated with more than ten sensors.

The trained neural network may comprise an LLM. The memory function may not be provided in LLMs. Therefore, the signal may be encoded before entering the transformer architecture. A positional encoding may be embedded in input signals by applying a normalized cosine. This may lead to a distortion of the data and time to the signal may be encoded.

In another embodiment the data-driven model may be trained by feeding a plurality of historic process signal data, wherein the plurality of signal may be indicative of at least an operating status change of the chemical plant and a failure of a device of the chemical plant, a detrimental drift of the chemical process or a configuration of the chemical process resulting in a deficient outcome of the chemical process.

In another embodiment the one or more chemical production process(es) may be performed as a continuous production process or wherein the chemical process may be performed as a batch process. The batch process(es) may comprise two or more batches and the one or more process signal data is associated with a single batch of the batch process.

In another embodiment the one or more process signal data may be captured during operation of the chemical pro-duction process, wherein process signal data may be provided to the data-driven model continuously during the operation of chemical production process(es), wherein anomalous event(s) may be detected continuously during the operation of chemical production process(es). This may enable real-time and hence more reliable and effective production process monitoring.

During operation of chemical production process(es) may include real-time monitoring while the chemical product is produced. Real-time may relate to a certain time scale depending on the change behaviour of the chemical process(es) e.g., the pressure in a reactor may not jump but changes to an anormal fashion for one hour.

In another embodiment the chemical process may be performed as a batch process comprising a plurality of batches and the time series received by the monitoring unit may associated with a single batch of the batch process. The batch process may be performed repeatedly, i.e., as a plurality of subsequent separate batches. Each batch may be once provided with an amount of raw materials as input materials and once provides an amount of a chemical product.

In another embodiment the one or more process signal data may be captured during the chemical production process, wherein in a continuous production, the chemical production process may be monitored and/or controlled continuously or in a batch production process the chemical production process may be monitored and/or controlled per batch.

In another embodiment the provided one or more detected anomalous event(s) associated with the respective one or more process signal data for monitoring and/or controlling the chemical production process of the one or more chemical plant(s) comprise message data indicating the one or more type of anomalous event(s). The type of the one or more anomalous event(s) may relate to a failure of a device of the chemical plant, an anomalous drift of the chemical production process or a configuration of the chemical production process resulting in deficient condition data associated with the chemical production process and/or quality anomalies. Based on the one or more type(s) of anomalous event(s), one or more instructions for adjusting the production process may be provided.

In another embodiment the provided one or more detected anomalous event(s) associated with the respective one or more process signal data for monitoring and/or controlling the chemical production process of the one or more chemical plant(s) may comprise adjusted control data configured to control the one or more chemical plant(s). The adjusted control data may comprise one or more instruction(s) for controlling the chemical plant based on the detected anomalous event(s) and/or the type of the anomalous event(s). Adjusting the chemical process may comprise temporarily halting the chemical process, aborting the chemical process, redirecting a flow of the chemical processor changing a physical parameter value determining the chemical process. A temporary halt of the chemical process, an abort of the chemical process, a flow redirection during the chemical process and/or a process parameter change during the chemical process may be measurement(s) changing the chemical process.

BRIEF DESCRIPTION OF THE DRAWINGS

In the following, the present disclosure is further described with reference to the enclosed figures. The same reference numbers in the drawings and this disclosure are intended to refer to the same or like elements, components, and/or parts.

Fig. 1 illustrates an example embodiment of a production environment and anomalies that may occur.

Fig. 2a illustrates an example embodiment of an RNN reconstruction architecture for anomaly detection.

Fig. 2b illustrates an example embodiment of an RNN Forecast architecture for anomaly detection.

Fig. 3 illustrates an example embodiment of Multi-Scale Convolutional Recurrent Encoder-Decoder architecture.

Fig. 4 illustrates an example embodiment of a Temporal Hierarchical One-Class Network architecture.

Fig. 5 illustrates an example embodiment of an anomaly detection process.

Fig. 6 illustrates an example embodiment of the pre-processing of the process signal data.

Fig. 7 illustrates an example of a diagram relating process signal data associated with one or more sensor(s) in a chemical plant and quality data associated with chemical product being produced by the chemical plant.

Fig. 8 illustrates an example of a method for monitoring and/or controlling a chemical production process.

DETAILED DESCRIPTION

The following embodiments are mere examples for implementing the method, the system or application device disclosed herein and shall not be considered limiting.

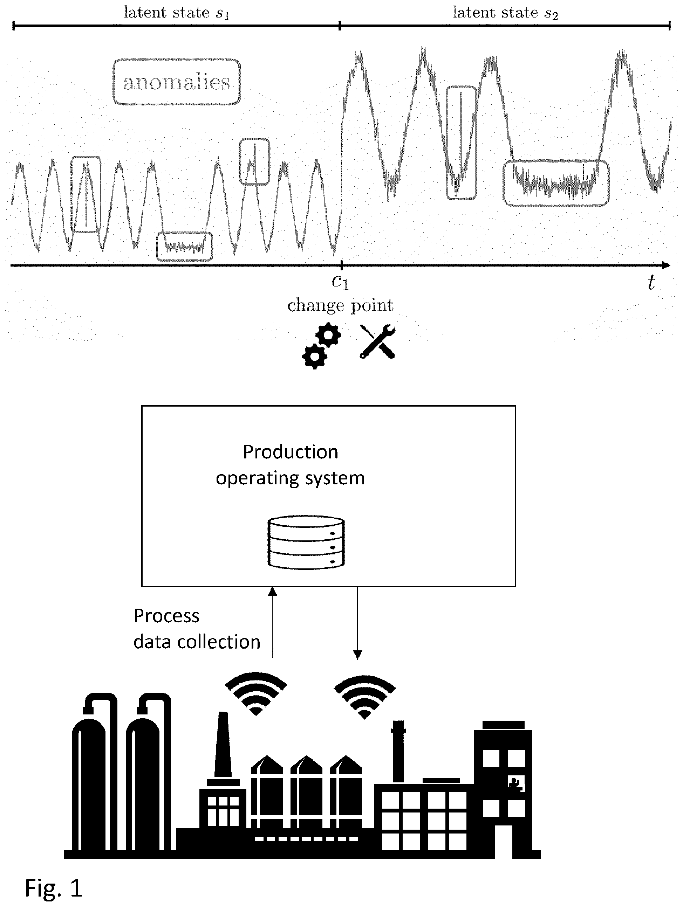

Fig. 1 illustrates an example embodiment of a chemical plant being configured to perform a chemical production process associated with time series data and anomalies.

A chemical plant may comprise one or more sensor(s), in most embodiments a plurality of sensors. The sensors may be configured for detecting physical parameters, in most embodiments a plurality of physical parameters, of the performed chemical production processes and may provide actual time series corresponding to the detected physical parameters to the plurality of physical parameters. For example, the sensors may relate to temperature sensors, flow rate sensors and/or pressure sensors. In an example temperatures or pressures in container(s) or pipe(s) of the chemical plant may be provided to the production operating system. The sensor(s) may not be associated with a device of the chemical plant, i.e. the sensor may not monitor a particular device, i.e. asset, of the chemical plant. The time-series may relate to multivariate times-series sensor data. Multivariate time-series sensor data may relate to a collection of data points. The data point(s) may contain multiple measurements captured by multiple sensors at different points in time. The data may involve recording observations of multiple variables, each of which is measured by a different sensor at a specific point in time.

The chemical plant may comprise one or more condition(s). Condition(s) may depend on operating states. Changing conditions of the chemical plant may result in deviating physical parameter(s). Changing conditions of the chemical plant may result in change point(s) as shown in Fig. 1. Change point(s) and different conditions may not be known by one or more operators and/or may cannot be extracted based on the process signal data measured by one or more sensor(s). Change point(s) may not relate to an anomalous event. Change point(s) may occur when a condition of the chemical plant may be adapted in order to improve the chemical process. Further examples for conditions of the chemical plant may comprise on/off states of the chemical plant. Condition(s) of the chemical plant may relate to process state(s). Process states may comprise start-up states, stable states and shut down states. Start-up states may be states, where the chemical plant may be starting up, but is not in a stable state. Therefore, the physical parameter(s) may vary. Stable states may be states, where the chemical plant may be operating under stable condition(s). Stable condition(s) may be condition(s), where the process runs within predefined specification. Shut down states may be states, where the production process may still be running, but the physical parameter(s) may change. There may be scenarios when the behavior of a machine changes based on usage or external factor. Change points may occur after a turn-around or shut down. There may be various other external factors leading to time-series which are not predictable or lead to other changes in the data captured by the sensors. Therefore, the values of the physical parameters may change without showing an anomaly and it may be important to detect anomalies independently from the exact values.

The production operating system may be configured for participating in a method for monitoring and/or controlling the chemical production process. The chemical plant may perform one or more chemical production processes. An operator may attend the chemical production process and may operate the production operating system. The chemical plant may be connected to an internet cloud server for monitoring and/or controlling the chemical production process. The internet cloud server may comprise production operating system and may be configured to provide the production operating system as a service. The internet cloud server may provide the production operating system.

The chemical production process may be performed as a continuous production process. Alternatively, the chemical production process may be performed as a batch process comprising a plurality of batches. The production operating system of the chemical plant may provide a time series of one or more detected values of the physical parameters of the chemical production process for the production operating system.

The production operating system may be used for producing a chemical product and may be configured for monitoring and/or controlling the chemical production process and for participating in a method as follows for monitoring and/or controlling the chemical process.

The monitoring and/or controlling unit may monitor the chemical production process and receives time series and may feed the received time series to the event recognition module. The event recognition module may be part of the production operating system. The time series received by the production operating system may be associated with a single batch of the batch process in case the chemical process is performed as a batch process.

The event recognition module may recognize an anomalous event within the fed time-series and may provide an event signal indicating the detected anomalous event. As the event recognition module, a trained data-driven model may detect the anomalous event.

Detecting the anomalous event may comprise determining the anomalous event to be a failure of device(s) of the chemical plant, an anomalous drift of the chemical production process or a configuration of the chemical production process resulting in a deficient outcome of the chemical production process.

Detecting the anomalous event may comprise meeting or exceeding a predefined ratio of anomalous event recognized incorrectly and anomalous event ignored incorrectly.

The event recognition module may further detect a non-anomalous event within the fed time series and provide an event signal indicating the recognized non-anomalous event to be for example a status change of the chemical plant. The production operating system may receive the provided event signal from the monitoring unit and may raise an alarm and/or adapt the chemical production process when the received event signal may indicate a failure of a device of the chemical plant, an anomalous drift of the chemical production process or a configuration of the chemical production process resulting in a deficient outcome of the chemical production process. The production operating system may do not raise an alarm or adapt of the chemical production process if the received event signal may merely indicate an operating status change of the chemical process(es) or a non-detrimental drift of the chemical process.

Adapting the chemical production process may comprise temporarily halting the chemical production process, aborting the chemical production process, redirecting a flow of the chemical production process or changing a physical parameter value determining the chemical production process.

The data-driven model may be trained by feeding a plurality of historic time series of the detected values, the plurality of historic time series may comprise at least an operating status change of the chemical plant, a failure of one or more device(s) of the chemical plant(s), a detrimental drift of the chemical process and/or a configuration of the chemical production process resulting in a deficient outcome of the chemical production process. The historic time series may be stored in a database. The data-driven model may preferably be trained with labeled historic time series and unlabeled historic time series. An operator may train the artificial neural network.

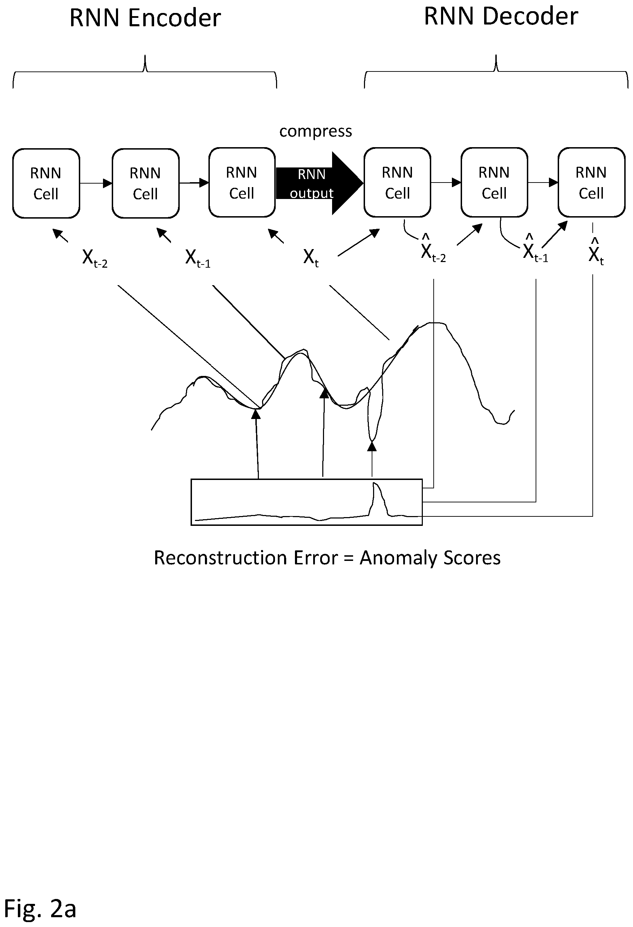

Fig.2a illustrates an example embodiment of an RNN reconstruction architecture for anomaly detection.

A RNN architecture for time-series forecasting may comprise an input layer, one or more hidden layers with LSTM or GRU cells and an output layer.

Long Short-Term Memory Networks based Encoder-Decoder schemes may be used for Anomaly Detection (EncDec-AD) in the context of a chemical production process as described in the context of Fig. 1. Long Short Term Memory Networks based Encoder-Decoder schemes may learn to reconstruct 'normal' time-series behavior, and thereafter may use reconstruction error(s) to detect anomalies.

The encoder may take an input sequence and processes it step by step, generating a fixed-length vector representation called the context vector. The encoder may use LSTM cells to capture the sequential dependencies and encode the input sequence into a dense representation. An LSTM-based encoder may be used to map an input sequence to a vector representation of fixed dimensionality. The LSTM cells may allow the model to capture long-term dependencies and handle vanishing or exploding gradients problems that often occur in traditional recurrent neural networks. Once the input sequence may be encoded into a context vector, the decoder may take over and generate the output sequence. The decoder may also be based on LSTM cells and may use the context vector as the initial hidden state. At each step, the decoder may predict the next value in the output sequence based on the current hidden state and the previously generated values. The context vector may help the decoder to leverage the information encoded in the input sequence to make accurate predictions.

In EncDec-AD, an encoder may learn a vector representation of the input time-series and the decoder uses this representation to reconstruct the time-series. The LSTM-based encoder decoder may be trained to reconstruct instances of normal time series with the target time-series being the input time-series itself. Then, the reconstruction error at any future time instance may be used to compute the likelihood of anomaly at that point. An encoder-decoder model may learn using merely the normal sequences for detecting anomalies in multi-sensor time-series: The intuition here may be that the encoder-decoder pair would only have seen normal instances during training and may learn to reconstruct them. When given an anomalous sequence, it may not be able to reconstruct it well, and hence would lead to higher reconstruction errors compared to the reconstruction errors for the normal sequences. EncDec-AD may only use the normal sequences for training. This may be particularly useful in scenarios when anomalous data may not be available or may be sparse, making it difficult to learn a classification model over the normal and anomalous sequences. This may be especially true of chemical production process that may undergo periodic maintenance and therefore get serviced before anomalies may show up in sensor readings.

Fig. 2a illustrates an example time series of length t, where the points may be an m-dimensional vector of readings for m variables at the respective time-instance. In the example of Fig. 1 multiple such time-series may be available. The LSTM Encoder-Decoder model may be trained to reconstruct the normal time-series. The reconstruction errors may then be used to obtain the likelihood of a point in a test time-series being anomalous. For each data point, an anomaly score of the point being anomalous may obtained. A higher anomaly score may indicate a higher likelihood of the point being anomalous. The LSTM encoder may learn a fixed length vector representation of the input time-series and the LSTM decoder may use this representation to reconstruct the time-series using the current hidden state and the value predicted at the previous time-step. The encoder and decoder may be jointly trained to reconstruct the timeseries in reverse order. Time-series prediction models may be effective for anomaly detection by using the prediction error or a function of prediction error as a measure of the severity of anomaly. EncDec-AD may learn a representation from the time-series sequence which may then be used to reconstruct the sequence and may therefore be different from prediction-based anomaly detection models.

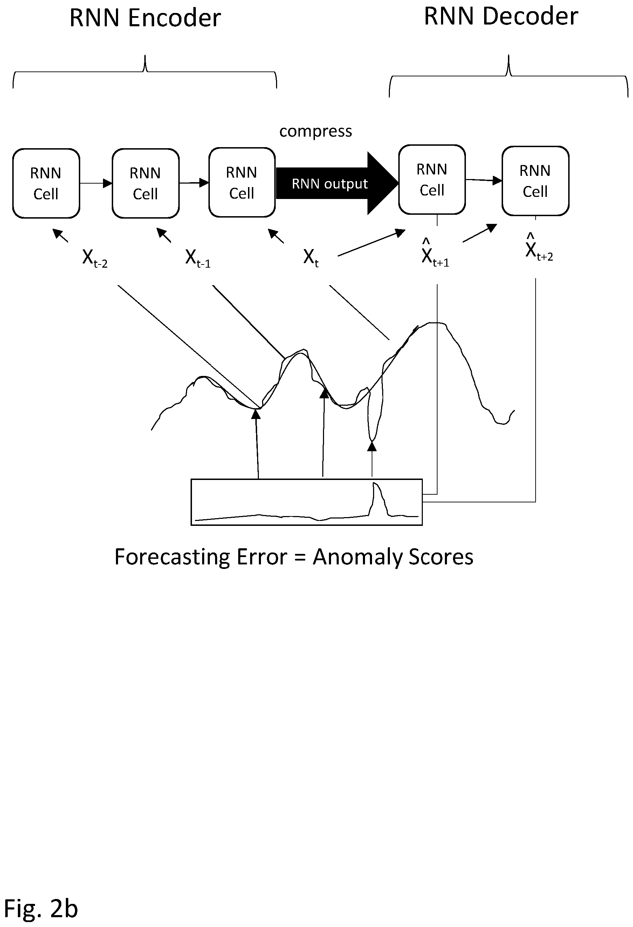

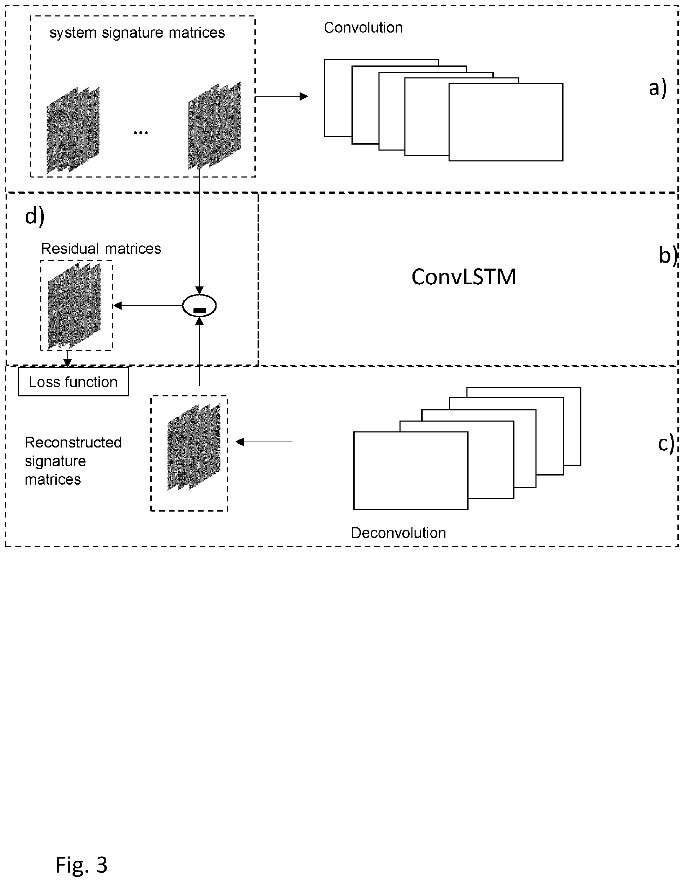

Fig. 2b illustrates an example embodiment of an RNN forecast architecture for anomaly detection. A RNN architecture for time-series forecasting may comprise an input layer, one or more hidden layers with LSTM or GRU cells and an output layer. Fig. 3 includes a similar RNN Long Short Term Memory Networks based Encoder-Decoder architecture as described in the context of Fig. 2a. Anomalies may be measured by employing $(Predicted(t)-Observed(t))^2$ *R > MSE (maxtrain). MSE (maxtrain) may be the Mean Square Error of a train set, R may be a ratio that may be set as 0.3. The anomaly detection mechanism may be based on a prediction error.

Fig. 3 illustrates an example embodiment of Multi-Scale Convolutional Recurrent Encoder-Decoder architecture. The architecture as illustrated in Fig. 3 may be used in the context of detecting anomalous events in one or more chemical plant(s) as described in the context of Fig. 1.

For applying a Multi-Scale Convolutional Recurrent Encoder-Decoder (MSCRED) in this context, multi-scale (resolution) system signature matrices may be generated. Then the spatial information in signature matrices may be encoded via a convolutional encoder and the temporal information may be modeled via an attention based Convolutional LSTM. Then signature matrices based upon a convolutional decoder may be reconstructed and a square loss may be used.

First input multivariate time series data may be preprocessed, e.g. including normalizing the data and dividing it into training, validation, and test periods. MSCRED may be trained by using a deep encoder-decoder framework to learn the underlying patterns in the input time series data. It may employ multi-scale (resolution) system signature matrices to capture the system statuses at different time segments. The trained model may be used to reconstruct the signature matrices of the validation and test data. The reconstruction errors may be calculated based on the difference between the original signature matrices and the reconstructed matrices.

The residual signature matrices, which represent the differences between the original and reconstructed signature matrices, may be used for anomaly detection. The number of poorly reconstructed pairwise correlations may be used as the anomaly score.

MSCRED may aim to detect and diagnose anomalies in multivariate time series data by using a deep learning approach and reconstructing the signature matrices. The goal of MSCRED may be to detect anomalies and to diagnose the anomalies, e.g. identify the abnormal time series that may be the cause of each anomalous event. MSCRED may employ multi-scale (resolution) system signature matrices to characterize the system statuses at different time segments and may adopt a deep encoder-decoder framework to generate reconstructed signature matrices. The framework may be able to model both inter sensor correlations and temporal dependencies of multivariate time series. The residual signature matrices may be further utilized to detect and diagnose anomalies.

The architecture of MSCRED is described in the following:

In a) the signature matrices may be generated by calculating the pairwise inner-product of two time series within a multivariate time series segment. For each pair of time series, the correlation $m_{ij}^t$ may be computed. The resulting correlations may then be used to construct an n x n signature matrix. Multiple signature matrices may be generated at different scales (or resolutions) by varying the length of the segments. A fully convolutional encoder may be used to encode the spatial patterns of system signature matrices. Scaled Exponential Linear Unit (SELU) may be used as the activation function and in the example of Fig. 3 four convolutional layers may be applied.

In b) temporal patterns may be encoded using attention-based convolutional LSTM networks. The spatial feature maps generated by convolutional encoder may be temporally dependent on previous time steps. The performance of ConvLSTM may deteriorate as the length of sequence increases. Therefore, ConvLSTM may be applied, which may adaptively select relevant hidden states (feature maps) across different time steps. This may help to capture the temporal dependencies in the status data.

In c) the encoded signature matrices are then decoded using a deconvolutional neural network to get the reconstructed signature matrices. The decoder may be able to incorporate feature maps at different deconvolutional and ConvLSTM layers, which may be effective to improve anomaly detection performance.

In d) a square loss function may be calculated to measure the difference between the reconstructed status information and the ground truth. If the loss function may be higher than a threshold value, an anomalous event may be detected.

When giving the encoder loss-feedback it may be trained due to backpropagation adjusting its node and weight values. The encoder may be trained by inputting an initial part of the recorded video, wherein a monitoring part of the recorded video following the initial part is fed to the trained autoencoder in order to receive the event triggers.

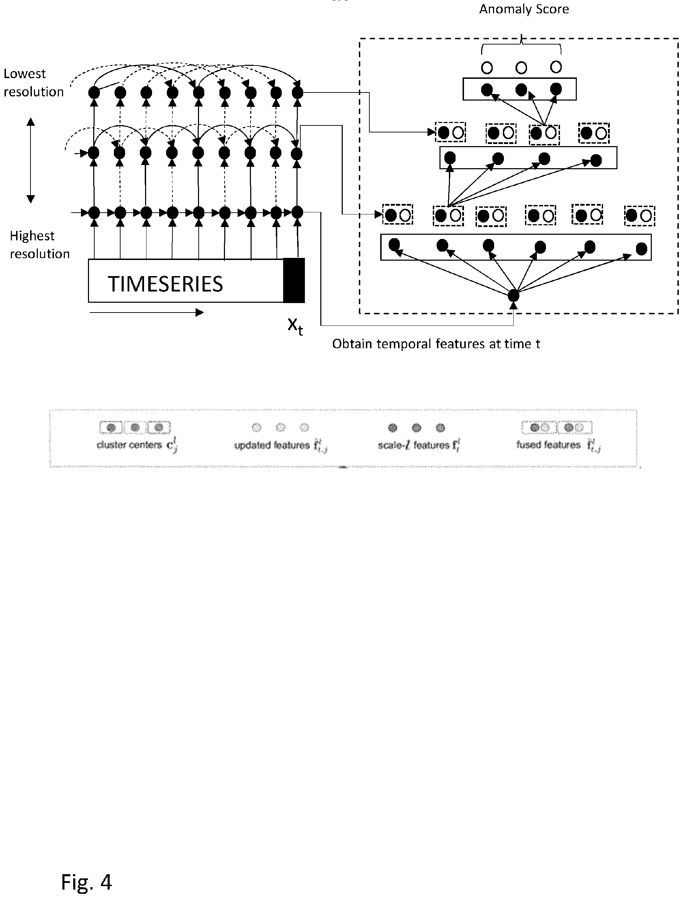

Fig. 4 illustrates an example embodiment of a Temporal Hierarchical One-Class Network architecture.

The architecture as illustrated in Fig. 4 may be used in the context of detecting anomalous events in one or more chemical plant(s) as described in the context of Fig. 1. A Temporal Hierarchical One-Class (THOC) network may be a temporal one-class classification model for anomaly detection. The idea of one-class classification may be that by assuming that most of the training data are normal, their characteristics may be captured and learned by a model. An outlier may then be detected when the current observation cannot be well-fitted by the model.

Two well-known and closely related one-class classification models are the one-class support vector machine (OC-SVM), which uses a hyperplane to separate the normal data from anomalous data and the support vector data description (SVDD), which uses a hypersphere to enclose the normal data. Deep SVDD may replace the kernel-induced feature space in SVDD by the feature space learned in a deep network.

THOC may use a dilated recurrent neural network (RNN) with skip connections to efficiently extract multi-scale temporal features from the timeseries. Other networks for extracting multiscale features may be used as an alternative. The application of skip connections may support model long-term dependencies in the timeseries and may alleviate the problem of vanishing gradient. Instead of using only the lowest resolution features obtained at the top layer of the dilated RNN, intermediate layers may contain relevant data. THOC may fuse features from all intermediate layers together by a differentiable hierarchical clustering mechanism. At each resolution, normal behaviors may be represented by multiple hyperspheres. This may capture the complex characteristics in real-world timeseries data of a chemical plant. A multiscale support vector data description (MVDD) may allow the whole model to be trained end-to-end. MVDD may be a one-class objective defined based on the difference between the fused multiscale features and hypersphere centers. A score measuring how the current observation deviates from the normal behaviors represented by the hyperspheres, may be applied for anomaly detection on an unseen observation.

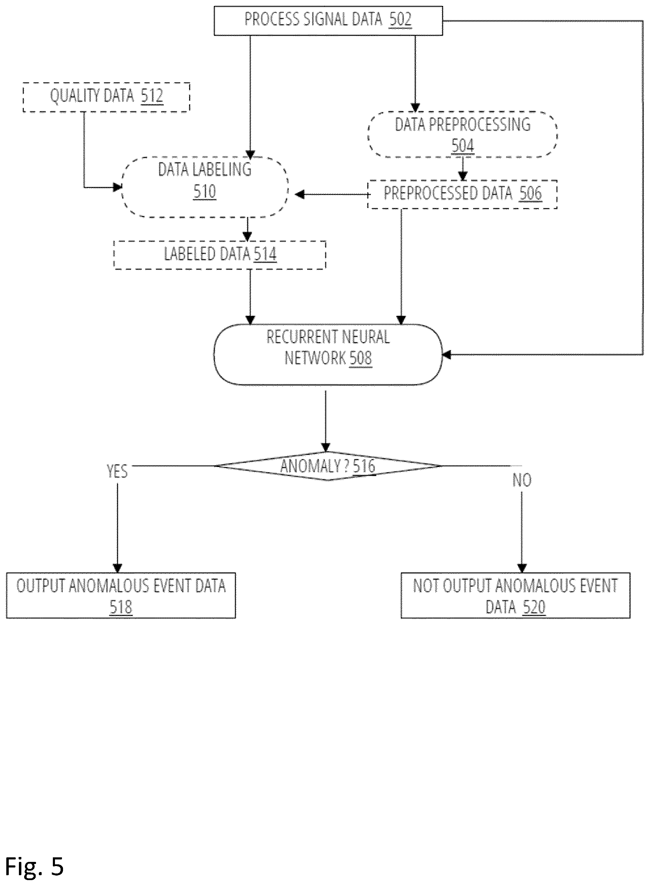

Fig. 5 illustrates an example embodiment of an anomaly detection process.

For detecting an anomalous event, process signal data 502 of one or more time-series associated with one or more chemical plant(s) may be provided. The process signal data 502 may be associated with one or more sensor(s) of the one or more chemical plant(s) as described in the context of Fig. 1. The process signal data may relate to raw sensor data. The process signal data 502 may relate to one or more sensor type(s), sensor location(s) and/or measurement value(s).

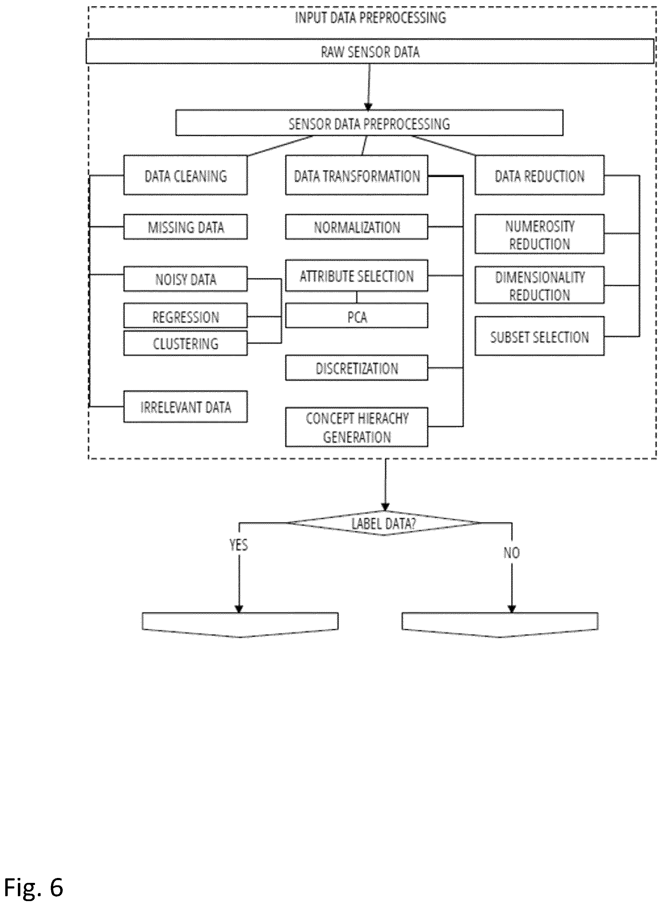

The process signal 502 data may be pre-processed 504. Data pre-processing 504 may be an optional process step. Data pre-processing 504 may be an essential step in preparing raw sensor data for further analysis and modeling. Data pre-processing may involve various techniques and operations making the process signal data suitable for further analysis. Data pre-processing may include cleaning, transformation to improve quality, reduce noise, handling missing values, extract meaningful features, and/or enhancing the data. Data pre-processing may be a critical step in the data analysis pipeline as it directly impacts the accuracy and effectiveness of subsequent data analysis or modeling tasks. Depending on the sensor type(s) and/or the sensor value(s) and or sensor location, one or more data pre-processing techniques may be applied. Further examples of data pre-processing are described in the context of Fig. 6.

At least a part of the process signal data 502 may be labeled. Alternatively, or in addition to the process signal data, the pre-processed data 506 may be the input data for the data labeling 501.

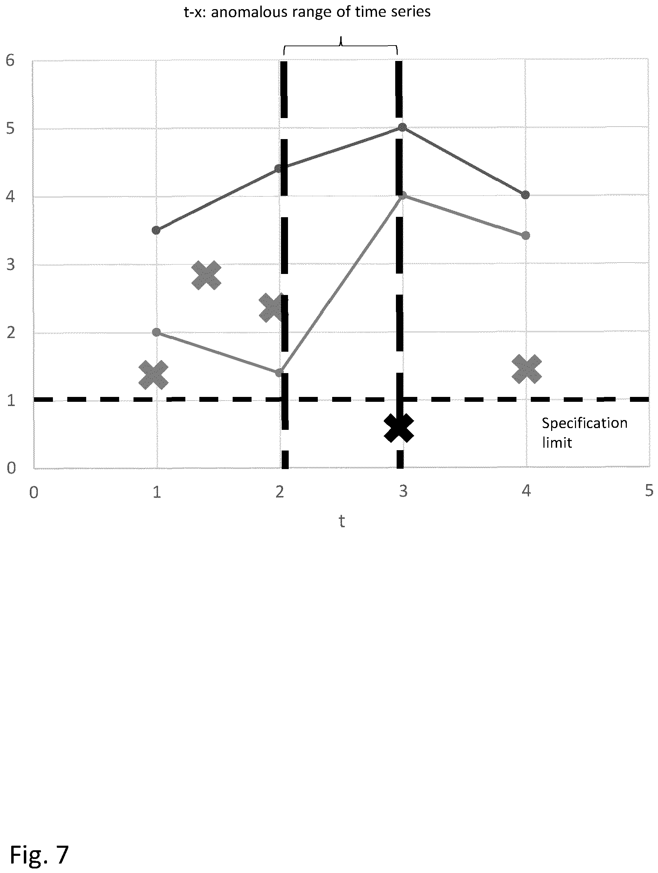

At least part of the process signal data 502 and/or the pre-processed data 506 may be labeled. Labeling may relate to mapping process signal data 502 and/or pre-processed data 506 to anomalous event(s). Labeling may include gathering additional time-series data for mapping the process signal data 502 and/or pre-processed data 506 to anomalous event(s). Quality data 512 may relate to the quality of the chemical product(s) being produced by the respective chemical production process and/or respective chemical plant and may relate to the respective time-series of the process signal data gathered for the data labeling 510. The respective quality data 512 may relate to quality anomalies. Quality anomalies may relate to poor chemical product qualities. The output of the data labeling 510 may be the labeled data 514. The quality anomalies may be on a coarser time grid compared to process anomalies. An example for labeling data is described in the context of Fig. 7.

The labeled data 514, pre-processed data 506 and/or process signal data 502 may be the input data of recurrent neural networks (RNNs) 508. The RNNs may be configured to classify anomalies. One or more model architectures of RNNs may be used for classifying anomalies. Example model architectures of RNN(s) for classifying anomalies are described in the context of Fig. 2, Fig. 2a, Fig. 3 and Fig.4. The one or more RNNs may be used in parallel. The RNNs providing the best output with a best fit may be used.

The target function may be a target function for semi-supervised anomaly detection. The Deep SAD (Deep Semi-Supervised Anomaly Detection) target function for all RNNs.

$$\min_{\mathcal{W}} \quad \frac{1}{n+m} \sum_{i=1}^{n} \|\phi(\mathbf{x}_i; \mathcal{W}) - \mathbf{c}\|^2 + \frac{\eta}{n+m} \sum_{j=1}^{m} (\|\phi(\tilde{\mathbf{x}}_i; \mathcal{W}) - \mathbf{c}\|^2)^{\tilde{y}_j}, \quad \eta > 0.$$

$n$: unlabeled samples, m: labelled samples, c: center, $\tilde{y}_j \in \{-1, +1\}$ labels, $\phi$: neural network Minimizing the distances to the center for the mapped points of labeled normal samples may induce a latent distribution with low entropy for the normal process signal data. In contrast, penalizing low variance via the inverse squared norm loss for the mapped points of labeled anomalies may induce a latent distribution with high entropy for the anomalous data.

The RNNs may be parametrized based on a training data set. The RNN may be trained based on a training data set. The training data set may include one or more historic process signal data associated with one or more sensors. Preferably, the training data set may include multiple process signal data associated with more than ten sensors. The training data set may include labeled and unlabeled process signal data.

The output of the RNNs 508 may be a signal Indicating that anomalous event data may be detected. The signal may be associated with the respective process signal data 502 and/or quality data 512 indicating the anomalous event.

Fig. 6 illustrates an example embodiment of the pre-processing of the process signal data.

Pre-processing of process signal data may be an optional step in the anomaly detection process as described in the context of Fig. 5. Pre-processing may relate to one or more pre-processing techniques on one or more raw sensor signal data associated with one or more sensor data type(s). The goal of the data pre-processing may be to enhance the data quality for further analysis and/or the data-driven model. Data pre-processing may relate to removal of noise, removal of certain effects that may occur randomly, however, may not be relevant for further analysis, reduce the dimension space and/or removal of irrelevant data in the data set and/or obtain relevant data.

Data pre-processing may relate to data cleaning, data transformation and/or data reduction. Data cleaning may include removal of irrelevant data, handling missing data e.g. by filling in missing values, cleaning of noisy data, regression and/or clustering techniques. Data transformation may include normalization of data, attribute selection principal components analysis (PCA), discretization and/or concept hierarchy generation. Data reduction may include numerosity reduction, dimensionality reduction and/or subset selection (see Fig. 6).

Examples of pre-processing of the process signal data that may be suitable for anomaly detection may include mapping from time-series space to frequency space via Fast Fourier Transformation, minima and/or maxima, transformation of the time grid coarser or finer and/or (PCA). In an example time intervals related to operating state(s) when the temperature is low may be uninteresting because the chemical plant may be in an off state. Therefore, in pre-processing the respective time interval(s) may be deleted.

Fig. 7 illustrates an example of a diagram relating process signal data associated with one or more sensor(s) in a chemical plant and quality data associated with chemical product being produced by the chemical plant.

The relation of process signal data associated with one or more sensor(s) in a chemical plant and quality data associated with chemical product being produced by the chemical plant may be used for labeling anomalous event(s). The diagram comprises an abscissa indicating a range of process time t of the performed chemical production process and an ordinate indicating a value of the chemical process and product quality.

The time series of process signal data associated with one or more sensor(s) in a chemical plant may be illustrated in the diagram as two lines. Each line in the diagram may relate to process signals of a respective sensor of the chemical plant. The process signal data associated with the sensor(s) may be gathered per second.

The crosses illustrated in the diagram may indicate the quality of the chemical product being produced in the chemical plant at the time, the process signal may be gathered. The quality of the chemical product may be gathered hourly. The quality of the chemical product may be analyzed by a laboratory associated with the chemical plant.

The dashed horizontal line may indicate a specification limit of the quality. Values below the specification limit may relate to chemical product being outside a quality specification. In other words, the values below the specification limit relate to a poor product quality. When e.g. at t=3 a poor quality of a chemical product may be determined, the process signal data in the interval t-x may be labeled as an anomalous range of time series. The labeling may be verified by one or more domain expert(s). At least a part of the process signal data may be labeled.

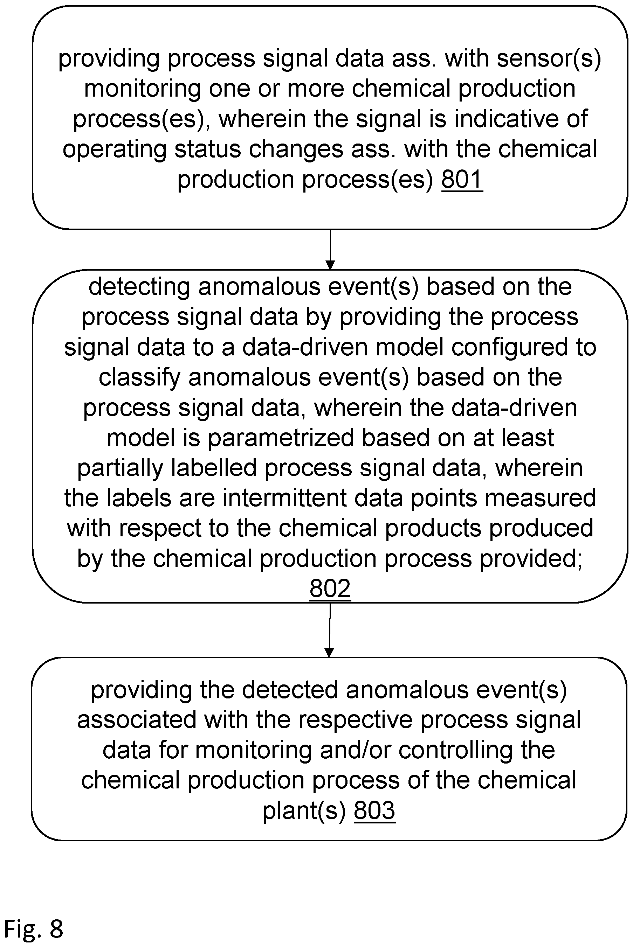

Fig. 8 illustrates an example of a method for monitoring and/or controlling a chemical production process.

The chemical production process may comprise process signal data indicating an anomalous event.

In block 801 one or more process signal data associated with sensor(s) monitoring one or more chemical production process(es), wherein the signal is indicative of operating status changes ass. with the chemical production process(es) may be provided. The provided one or more process signal data may comprise one or more pre-processed process signal data. Examples of data pre-processing techniques is described in the context of Fig. 6. The provided one or more process signal data may comprise one or more labeled processes signal data and one or more unlabeled process signal data. Labeling may include gathering operating status changes associated with the one or more chemical plant(s) and/or chemical product data associated with chemical product(s) being produced by the respective one or more chemical plant(s). An example of labelling is described in the context of Fig. 7. The one or more process signal data may be associated with one or more sensor type(s), sensor value(s) and/or sensor location(s). The one or more process signal data may be captured during the chemical production process, wherein in a continuous production, the chemical production process may be monitored and/or controlled continuously or in a batch production process the chemical production process may be monitored and/or controlled per batch.

In block 802 one or more anomalous event(s) based on the process signal data by providing the process signal data to a data-driven model configured to classify anomalous event(s) based on the process signal data, wherein the data-driven model is parametrized based on at least partially labelled process signal data, wherein the labels are intermittent data points measured with respect to the chemical products produced by the chemical production process provided may be detected. The data-driven model may be parametrized based on historic process signal data associated with one or more sensor(s) comprising one or more anomalous event(s) and one or more non-anomalous event(s). The data-driven model may be parametrized based on historic process signal data associated with one or more sensor(s) being associated with the respective chemical plant to be monitored and/or controlled. The data-driven model may comprise a trained neural network configured to classify one or more process signal data as anomalous event(s). Example architectures of the data-driven model are described in the context of Fig. 2, Fig. 2a, Fig. 3 and Fig.4.

In block 803 one or more detected anomalous event(s) associated with the respective one or more process signal data for monitoring and/or controlling the chemical production process of the one or more chemical plant(s) may be provided. Providing the detected anomalous event(s) may comprise message data indicating the one or more type of anomalous event(s). The provided one or more detected anomalous event(s) associated with the respective one or more process signal data may comprise adjusted control data configured to control the one or more chemical plant(s) based on the detected anomalous event(s). The adjusted control data may comprise temporarily halting the chemical production process, aborting the chemical production process, redirecting a flow of the chemical production process, or changing a physical parameter value determining the chemical production process. The one or more detected anomalous event(s) may be provided via a communication interface. The one or more detected anomalous event(s) may be displayed to the user. The result may be displayed as icon(s). For instance, the process signal data may be within predefined specification(s), outside predefined specification(s) or on the upper limits of predefined specification(s). The one or more detected anomalous event(s) may be displayed within a table. The one or more detected anomalous event(s) may include process signal data indicating deviations of the process signal data.

The method according to any of the preceding claims, wherein the chemical production process is performed as a continuous production process or wherein the chemical process is performed as a batch process.

The present disclosure has been described in conjunction with preferred embodiments and examples as well. However, other variations can be understood and effected by those persons skilled in the art and practicing the claimed invention, from the studies of the drawings, this disclosure and the claims.

Any steps presented herein can be performed in any order. The methods disclosed herein are not limited to a specific order of these steps. It is also not required that the different steps are performed at a certain place or in a certain computing node of a distributed system, i.e. each of the steps may be performed at different computing nodes using different equipment/data processing.

As used herein "determining" also includes "initiating or causing to determine", "generating" also includes "initiating and/or causing to generate" and "providing" also includes "initiating or causing to determine, generate, select, send and/or receive". "initiating or causing to perform an action" includes any processing signal that triggers a computing node or device to perform the respective action.

In the claims as well as in the description the word "comprising" or "including" or similar wording does not exclude other elements or steps and shall not be construed limiting to the elements or steps lined out. The indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation or further elements may be included.

Providing in the scope of this disclosure may include any interface configured to provide data. This may include an application programming interface, a human-machine interface such as a display and/or a software module interface. Providing may include communication of data or submission of data to the interface, in particular display to a user or use of the data by the receiving node, entity or interface.

Various units, circuits, entities, nodes or other computing components may be described as "configured to" perform a task or tasks. Configured to shall recite structure meaning "having circuitry that" performs the task or tasks on operation. The units, circuits, entities, nodes or other computing components can be configured to perform the task even when the unit/circuit/component is not operating. The units, circuits, entities, nodes or other computing components that form the structure corresponding to "configured to" may include hardware circuits and/or memory storing program instructions executable to implement the operation. The units, circuits, entities, nodes or other computing components may be described as performing a task or tasks, for convenience in the description. Such descriptions shall be interpreted as including the phrase "configured to." Any recitation of "configured to" is expressly intended not to invoke 35 U.S.C. § 112(f) interpretation.

In general, the methods, apparatuses, systems, computer elements, nodes or other computing components described herein may include memory, software components and hardware components. The memory can include volatile memory such as static or dynamic random-access memory and/or nonvolatile memory such as optical or magnetic disk storage, flash memory, programmable read-only memories, etc. The hardware components may include any combination of combinatorial logic circuitry, clocked storage devices such as flops, registers, latches, etc., finite state machines, memory such as static random-access memory or embedded dynamic random-access memory, custom designed circuitry, programmable logic arrays, etc.

Any disclosure and embodiments described herein relate to methods, systems, apparatuses, devices, chemicals, product(s), computer program elements lined out above and vice versa. Advantageously, the benefits provided by any of the embodiments and examples equally apply to all other embodiments and examples and vice versa.

All terms and definitions used herein are understood broadly and have their general meaning.

## Claims

1. A method for monitoring and/or controlling a chemical production process, wherein the chemical production process comprises process signal data indicating an anomalous event, the method comprising the steps of:

   - providing one or more process signal data associated with one or more sensor(s) monitoring one or more chemical production process(es), wherein the signal is indicative of one or more operating status changes associated with the one or more chemical production process(es);
   - detecting one or more anomalous event(s) based on the one or more process signal data by providing the process signal data to a data-driven model configured to classify anomalous event(s) based on the one or more process signal data, wherein the data-driven model is parametrized based on at least partially labelled process signal data, wherein the labels are intermittent data points measured with respect to the chemical products produced by the chemical production process provided;
   - providing the one or more detected anomalous event(s) associated with the respective one or more process signal data for monitoring and/or controlling the chemical production process of the one or more chemical plant(s).

2. The method according to claim 1, wherein providing one or more process signal data comprises pre-processing of the one or more process signal data by transforming process signal data from different sensor(s) to a common time scale and/or eliminating common time frames of the process signal data, in which the chemical process was in an off-state.

3. The method according to any of the preceding claims, wherein providing one or more process signal data comprises labelling at least part of the one or more process signal data based on chemical product data associated with chemical product(s) being produced by the respective one or more chemical production process(es).

4. The method according to any of the preceding claims, wherein the one or more process signal data associated with one or more sensor(s) comprises process signal data associated with one or more sensor type(s) and/or one or more sensor value(s) and/or one or more sensor location(s) associated with the chemical plant(s).

5. The method according to any of the preceding claims, wherein detecting the anomalous event comprises determining the one or more type(s) of anomalous event(s) based on the one or more properties of the specification.

6. The method according to any of the preceding claims, wherein the data-driven model is parametrized based on labelled historic process signal data and unlabelled historic process signal data associated with one or more sensor(s).

7. The method according to any of the preceding claims, wherein the data-driven model is parametrized based on one or more historic process signal data associated with multiple sensors being associated with multiple chemical production processes of a chemical plant to be monitored and/or controlled.

8. The method according to any of the preceding claims, wherein the data-driven model comprises a trained neural network comprising a time memory and configured to classify one or more process signal data as anomalous event(s).

9. The method according to any of the preceding claims, wherein the one or more process signal data is captured during operation of the one or more chemical production process(es), wherein process signal data is provided to the data-driven model continuously during the operation of one or more chemical production process(es), wherein anomalous event(s) are detected continuously during the operation of chemical production process.

10. The method according to any of the preceding claims, wherein detecting one or more anomalous event(s) may comprise validating the detected anomalous event(s) by mapping the process signal data signified as anomalous to chemical product data associated with chemical product(s) being produced by the respective one or more chemical production process(es).

11. The method according to any of the preceding claims, wherein the provided one or more detected anomalous event(s) associated with the respective one or more process signal data for monitoring and/or controlling the chemical production process of the one or more chemical plant(s) comprises message data indicating the anomalous event(s).

12. The method according to any of the preceding claims, wherein the provided one or more detected anomalous event(s) associated with the respective one or more process signal data for monitoring and/or controlling the chemical production process of the one or more chemical plant(s) comprises adjusted control data configured to control the one or more chemical plant(s).

13. An apparatus for monitoring and/or controlling a chemical production process, wherein the chemical production process comprises process signal data indicating an anomalous event, the method comprising the steps of:

   - a data providing interface configured to provide one or more process signal data associated with one or more sensor(s) monitoring one or more chemical production process(es), wherein the signal is indicative of one or more operating status changes associated with the one or more chemical production process(es);
   - an anomalous event detector configured to detect one or more anomalous event(s) based on the one or more process signal data by providing the process signal data to a data-driven model configured to classify anomalous event(s) based on the one or more process signal data, wherein the data-driven model is parametrized based on at least partially labelled process signal data, wherein the labels are intermittent data points measured with respect to the chemical products produced by the chemical production process provided;
   - an anomalous providing interface configured to provide the one or more detected anomalous event(s) associated with the respective one or more process signal data for monitoring and/or controlling the chemical production process of the one or more chemical plant(s).

14. A chemical plant comprising a production operating system for monitoring and/or controlling a chemical production process according to the methods of any one of the claims 1 to 12 and according to claim 13.

**15.** A use of the one or more anomalous event(s) detected according to the methods of any one of the claims 1 to 12 and according to claim 13 for adjusting the chemical production process for producing one or more chemical product(s).

Fig. 1

Fig. 2a

# RNN Encoder

# RNN Decoder

compress

| RNN Cell | RNN Cell | RNN Cell | RNN output | RNN Cell | RNN Cell |

$X_{t-2}$  $X_{t-1}$  $X_t$  $\hat{X}_{t+1}$  $\hat{X}_{t+2}$

Forecasting Error = Anomaly Scores

Fig. 2b

**Fig. 3**

Anomaly Score

Lowest resolution

Highest resolution

TIMESERIES

$X_t$

Obtain temporal features at time t

cluster centers $c_j^l$    updated features $\tilde{f}_{t,j}^l$    scale-$l$ features $f_t^l$    fused features $\hat{f}_{t,j}^l$

Fig. 4

Fig. 5

Fig. 6

t-x: anomalous range of time series

Fig. 7

providing process signal data ass. with sensor(s) monitoring one or more chemical production process(es), wherein the signal is indicative of operating status changes ass. with the chemical production process(es) 801

detecting anomalous event(s) based on the process signal data by providing the process signal data to a data-driven model configured to classify anomalous event(s) based on the process signal data, wherein the data-driven model is parametrized based on at least partially labelled process signal data, wherein the labels are intermittent data points measured with respect to the chemical products produced by the chemical production process provided; 802

providing the detected anomalous event(s) associated with the respective process signal data for monitoring and/or controlling the chemical production process of the chemical plant(s) 803

Fig. 8

## EUROPEAN SEARCH REPORT

Application Number

EP 24 20 3649

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU HAO ET AL: "Fault detection and diagnosis based on transfer learning for multimode chemical processes", COMPUTERS & CHEMICAL ENGINEERING, PERGAMON PRESS, OXFORD, GB, vol. 135, 15 January 2020 (2020-01-15), XP086070447, ISSN: 0098-1354, DOI: 10.1016/J.COMPCHEMENG.2020.106731 [retrieved on 2020-01-15] * pages 5-6; figure 3 * | 1-15 | INV. G05B23/02 |
| X | WO 2023/069973 A1 (UNIV EMORY [US]; GEORGIA TECH RES INST [US] ET AL.) 27 April 2023 (2023-04-27) * paragraph [0007] * | 1,13 | |
| A | TESSONI VALENTINA ET AL: "Predictive Maintenance for Filling Machines with Online Evolving Spiking Neural Networks", 2024 IEEE 8TH FORUM ON RESEARCH AND TECHNOLOGIES FOR SOCIETY AND INDUSTRY INNOVATION (RTSI), IEEE, 18 September 2024 (2024-09-18), pages 572-577, XP034758123, DOI: 10.1109/RTSI61910.2024.10761724 [retrieved on 2024-11-26] * the whole document * | 1 | |

TECHNICAL FIELDS SEARCHED (IPC)

G05B

The present search report has been drawn up for all claims

| Place of search | Date of completion of the search | Examiner |
|---|---|---|
| Munich | 12 March 2025 | Heiner, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 3649

This annex lists the patent family members relating to the patent documents cited in  the above-mentioned European search report.
The members are as contained in the European Patent Office EDP file on
The European Patent Office is in no way liable for these particulars which are merely given for the purpose of information.

12-03-2025

| Patent document cited in search report | Publication date | Patent family member(s) | Publication date |
|---|---|---|---|
| WO 2023069973 A1 | 27-04-2023 | NONE | |

For more details about this annex : see Official Journal of the European Patent Office, No. 12/82